# EUROPÄISCHE PATENTANMELDUNG

(11) **EP 3 708 912 A1**
(43) Veröffentlichungstag der Anmeldung: **16.09.2020**
(21) Anmeldenummer: 20157045.4
(22) Anmeldetag: 13.02.2020
(51) Int. Cl.: F24C 7/08

(54) **VERFAHREN ZUR STEUERUNG EINES GARGERÄTS UND GARGERÄT SOWIE SYSTEM**

(30) Priorität: 13.03.2019 DE 102019106329
(71) Anmelder: Miele & Cie. KG, 33332 Gütersloh (DE)
(72) Erfinder: Lind, Martin, 33397 Rietberg (DE); Kersting, André, 59329 Wadersloh (DE); Beier, Dominic, 33332 Gütersloh (DE); Mersch-Justus, André, 33758 Schloß Holte-Stukenbrock (DE); Kaiser, Ingo, 33106 Paderborn (DE)

(57) **Zusammenfassung**

Die Erfindung betrifft ein Verfahren zur Steuerung eines Gargeräts, umfassend Aufnehmen (100) eines Bilds eines zu garenden Garguts, Ausführen (101) einer auf Machine Learning basierenden Gargut-Erkennung an dem aufgenommenen Bild, um Wahrscheinlichkeiten der Übereinstimmung des zu garenden Garguts mit bekannten Gargütern zu ermitteln, falls mindestens eine Wahrscheinlichkeit einen vorgegebenen Schwellenwert übersteigt (102), Auswählen eines Garprogramms, das dem zugehörigen bekannten Gargut zugeordnet ist, dem Gargerät das ausgewählte Garprogramm angeben (103), Erhöhen des Wahrscheinlichkeitswerts für das aufgenommene Bild und das zugehörige Gargut (106), falls ein Benutzer das ausgewählte Garprogramm im Anschluss startet, oder Verringern des Wahrscheinlichkeitswerts für das aufgenommene Bild und das zugeordnete Gargut (105), falls ein Benutzer das ausgewählte Garprogramm verwirft,
ein Gargerät (2) zur Ausführung des Verfahrens, umfassend eine Haupt-Gerätesteuereinheit (18, 26) zur Steuerung von Bedien- und Anzeigeelementen (14) und Garfunktionen des Gargeräts, eine Netzwerkschnittstelle mit einer zweiten Steuereinheit (16), eine Kamera (6), die mit der zweiten Steuereinheit (16) verbunden und eingerichtet ist, Bilder des Garraums aufzunehmen, wobei die zweite Steuereinheit (16) eingerichtet ist, unabhängig von der Haupt-Gerätesteuereinheit (18) aufgenommene Bilder zu verarbeiten und über die Netzwerkschnittstelle zu versenden,
sowie ein System mit dem Gargerät, umfassend einen Server (4) mit einer Datenbank (10), die Bild-Merkmale bekannter Gargüter und für jedes Gargut ein eindeutig zugeordnetes Garprogramm speichert, sowie mit einer Netzwerkschnittstelle, wobei der Server (4) eingerichtet ist zum Ausführen einer auf Machine Learning (12) basierenden Gargut-Erkennung an einem von dem Gargerät über die Netzwerkschnittstelle empfangenen Bild, um Wahrscheinlichkeiten der Übereinstimmung des zu garenden Garguts (8) mit bekannten Gargütern zu ermitteln, falls mindestens eine Wahrscheinlichkeit einen vorgegebenen Schwellenwert übersteigt, das Garprogramm auszuwählen, das dem zugehörigen bekannten Gargut zugeordnet ist; und dem Gargerät (2) das ausgewählte Garprogramm anzugeben.

## Beschreibung

Die Erfindung betrifft ein Verfahren zur Steuerung eines Gargeräts, ein Gargerät und ein System mit dem Gargerät.

Hochwertige Gargeräte weisen häufig eine Anzahl von automatischen Garprogrammen für verschiedene Gerichte auf. Allerdings ist der Prozess von der Auswahl bis zum Start eines Automatikprogramms relativ komplex, d.h. der Benutzer muss eine hohe einstellige oder sogar zweistellige Anzahl von Schritten durchlaufen bzw. ausführen, um das Gargerät entsprechend einzustellen. Beispielsweise kann im Durchschnitt eine Anzahl von 8 Einstellungs-Schritten in einer Menüstruktur erforderlich sein, bis das Programm gestartet ist.

Diese Programme sind weiterhin auf eine bestimmte Anzahl begrenzt, etwa aufgrund begrenzten Speicherplatzes in der Gerätesteuerung, und ggf. auch nicht beliebig anpassbar. Aufgrund der nötigen Standardisierung solcher Programme sind sie für individuelle Lebensmittel bzw. Gerichte auch nicht immer optimal angepasst.

Für die Zubereitung von Gerichten, die nicht als Automatikprogramm verfügbar sind, muss der Benutzer manuelle Eingaben zur Erreichung einer produktgeeigneten Einstellung tätigen. Dabei wird von dem Benutzer eine Vielzahl von Informationen über den Garprozess und die zu garenden Lebensmittel abgefragt. Die Lebensmittel- und Gerichteigenschaften beeinflussen das Endergebnis der Zubereitung erheblich. Aus diesem Grund muss der Nutzer oftmals zu Kochratgebern und anderen ausgewählten Recherchemöglichkeiten greifen, um sich umfassend zu informieren. Dieser Eingabe- und Informationsprozess ist sehr zeitaufwändig und führt auf Grund der Informationsflut im Internet und teils Uneinigkeiten in Kochratgebern zu Irreführungen. Eine falsche Eingabe kann folglich zu einer falschen bzw. nicht optimalen Zubereitung der Lebensmittel führen.

Die Gargeräte können zudem nicht erkennen, dass ein Benutzer Lebensmittel bereits zubereitet hat und dies nochmals ausführt. Daraus folgt, dass er vor Zubereitung des gleichen Gerichts, das nicht als Automatikprogramm verfügbar ist, alle Eingaben erneut tätigen muss. Die Garangaben auf standardisierten Fertiggerichten wie Tiefkühlwaren sind meist Richtwerte, die nicht optimal an das eingesetzte Gargerät angepasst sind.

Es ist daher Aufgabe der Erfindung, ein Steuerungsverfahren für ein Gargerät sowie ein Gargerät bereitzustellen, bei dem der Interaktionsaufwand des Nutzers begrenzt werden kann. Somit können die genannten Nachteile beseitigt oder zumindest verringert werden. Dadurch erfährt der Benutzer eine erhebliche Reduktion des Zeitaufwands und der möglichen Fehlerquellen.

Erfindungsgemäß wird dieses Problem durch ein Verfahren, ein Gargerät und ein System gemäß den unabhängigen Ansprüchen gelöst. Vorteilhafte Ausgestaltungen und Weiterbildungen der Erfindung ergeben sich aus den nachfolgenden Unteransprüchen.

Gemäß einem ersten Aspekt der Erfindung wird ein Verfahren zur Steuerung eines Gargeräts bereitgestellt, umfassend:
- Aufnehmen eines Bilds eines zu garenden Garguts;
- Ausführen einer auf Machine Learning basierenden Gargut-Erkennung an dem aufgenommenen Bild, um Wahrscheinlichkeiten der Übereinstimmung des zu garenden Garguts mit bekannten Gargütern zu ermitteln;
- falls mindestens eine Wahrscheinlichkeit einen vorgegebenen Schwellenwert übersteigt, Auswählen eines Garprogramms, das dem zugehörigen bekannten Gargut zugeordnet ist;
- dem Gargerät das ausgewählte Garprogramm angeben;
- Erhöhen des Wahrscheinlichkeitswerts für das aufgenommene Bild und das zugehörige Gargut, falls ein Benutzer das ausgewählte Garprogramm im Anschluss startet; oder
- Verringern des Wahrscheinlichkeitswerts für das aufgenommene Bild und das zugeordnete Gargut, falls ein Benutzer das ausgewählte Garprogramm verwirft.

Lebensmittel werden durch die Erfindung vor Beginn eines Garprogramms mittels Objekterkennung an einem von der Kamera erfassten Bild erkannt. Die visuelle Objekterkennung beruht auf Machine Learning. Bei der Identifikation des Lebensmittels bzw. des Garguts wird nach Übereinstimmungen auf dem erfassten Bild mit vorab definierten Mustern bzw. Bild-Merkmalen gesucht. In Abhängigkeit des ermittelten Garguts wird der optimale Garprozess bestimmt, indem ein passendes Garprogramm ausgewählt wird. Alle zur Einstellung der Parameter des Garprozesses notwendigen Informationen werden folglich vom Gargerät automatisch ermittelt und ausgewählt.

Eine Erkennung und Auswahl eines Garprogramms erfolgt erfindungsgemäß nur, wenn mindestens ein vorgegebener Schwellenwert, beispielsweise 80%, der Übereinstimmung erreicht/übertroffen wird. Sofern der Übereinstimmungs-Wert geringer ist, kann nicht von einer zuverlässigen Erkennung ausgegangen werden.

Das Gargerät kann anhand des ihm angegebenen Garprogramms dem Benutzer ein Automatikprogramm vorschlagen. "Angeben eines Garprogramms" im Sinne der Erfindung schließt ein, das Garprogramm als solches zu übermitteln, aber ebenso, dem Gargerät Informationen zu übermitteln, die es ihm ermöglichen, das Garprogramm selbst zu ermitteln, etwa aus einem internen Speicher abzurufen, bzw. zu erstellen.

Erfindungsgemäß wird keine explizite Bestätigung von dem Benutzer eingefordert, z.B. durch Auswahl des richtigen Garguts aus einer Vorschlagsliste. Stattdessen wird als indirekte Bestätigung dafür gewertet, dass das vorgeschlagene Garprogramm dem zu garenden Gargut entspricht, dass der Benutzer das vorgeschlagene Programm im Anschluss startet. Das verringert die Anzahl an notwenigen Bedienschritten und ist für den Benutzer auch intuitiv.

Im Kontext dieser Anmeldung ist unter "im Anschluss starten" zu verstehen, dass der Benutzer zwischenzeitlich kein anderes Programm wählt oder das Gerät aus- und dann wieder einschaltet. Es schließt nicht aus, dass der Benutzer am Gerät andere Eingaben tätigt, wie beispielsweise eine Zeitprogrammierung des im Anschluss zu startenden Programms. Auch bedeutet "Starten" nicht ausschließlich ein unmittelbares Starten, sondern umfasst auch, eine Zeitprogrammierung zu aktivieren, gemäß der ohne weiteren Benutzereingriff das Programm zu einer eingestellten Zeit bzw. nach einer eingestellten Zeitspanne startet.

Durch die Erfindung kann weiter die Qualität des Machine Learning-Algorithmus kontinuierlich verbessert werden. Verwirft der Benutzer das vorgeschlagene Automatikprogramm, so kann davon ausgegangen werden, dass die Erkennung nicht zum richtigen Ergebnis führte, und umgekehrt kann davon ausgegangen werden, dass die Erkennung richtig war, wenn der Benutzer das Programm startet. Die Wahrscheinlichkeiten des Machine Learning-Prozesses können entsprechend angepasst werden, um für zukünftige Erkennungen ein verbessertes Ergebnis zu liefern. Mit anderen Worten: erfindungsgemäß erfolgt eine Nutzung des Bildes und der vom Benutzer rückgemeldeten (indirekten) Bestätigung bzw. des Widerspruchs zur Verbesserung des Erkennungswertes im Rahmen der Verbesserung eines Machine-Learning-Modells bzw. -Algorithmus'.

Gemäß einer bevorzugten Ausführung umfasst das Verfahren weiter, falls die mindestens eine Wahrscheinlichkeit den vorgegebenen Schwellenwert nicht übersteigt oder der Benutzer das ausgewählte Garprogramm verwirft:
- Erfassen eines vom Benutzer des Gargeräts im Anschluss eingestellten Garguts und/oder Garprogramms; und
- Erstellen einer Zuordnung zwischen dem aufgenommenen Bild und dem Gargut und/oder Garprogramm oder Erhöhen der Wahrscheinlichkeit einer existierenden Zuordnung.

Gemäß einer bevorzugten Ausführung wird das Bild von einer Kamera des Gargeräts oder eines mobilen Endgeräts aufgenommen.

Das erfindungsgemäße Verfahren kann sich einer im Gargerät vorhandenen Kamera bedienen, aber ebenso auch alternativ oder zusätzlich einer Kamera eines mobilen Endgeräts wie einem Smartphone oder Tablet.

Gemäß einer bevorzugten Ausführung umfasst das Verfahren weiter, falls die Wahrscheinlichkeiten mehrerer bekannter Gargüter den vorgegebenen Schwellenwert überschreiten:
- Auswählen eines jeweiligen Garprogramms für jedes bekannte Gargut, dessen Wahrscheinlichkeit den vorgegebenen Schwellenwert überschreitet;
- dem Gargerät die ausgewählten Garprogramme in der Reihenfolge absteigender Wahrscheinlichkeit angeben;
wobei der Wahrscheinlichkeitswert für das aufgenommene Bild und das zugehörige Gargut bei dem Garprogramm erhöht wird, das der Benutzer im Anschluss startet.

Gemäß einer bevorzugten Ausführung wird der Wahrscheinlichkeitswert für das aufgenommene Bild und das zugeordnete Gargut für Garprogramme verringert, die der Benutzer nicht im Anschluss startet. Ein Bestätigen oder Ablehnen der Erkennung führt nicht zwingend direkt zu einer Erhöhung oder Reduzierung der Erkennungswahrscheinlichkeit. Ggf. muss mit Hilfe der neuen Informationen der Algorithmus neu trainiert und kalibriert werden, bevor dies Auswirkungen auf den realen Erkennungsprozess hat.

Gemäß einer bevorzugten Ausführung wird dem Gargerät das ausgewählte Garprogramm angeben, indem ein dem Garprogramm zugeordnetes Gargut angegeben wird.

Gemäß einem weiteren Aspekt wird ein Gargerät bereitgestellt, das zur Ausführung des vorstehenden Verfahrens eingerichtet ist und umfasst:
- eine Haupt-Gerätesteuereinheit zur Steuerung von Bedien- und Anzeigeelementen und Garfunktionen des Gargeräts;
- eine Netzwerkschnittstelle mit einer zweiten Steuereinheit;
- eine Kamera, die mit der zweiten Steuereinheit verbunden und eingerichtet ist, Bilder des Garraums aufzunehmen;
wobei die zweite Steuereinheit eingerichtet ist, unabhängig von der Haupt-Gerätesteuereinheit aufgenommene Bilder zu verarbeiten und über die Netzwerkschnittstelle zu versenden.

Kameras finden immer mehr Einzug in Hausgeräte. Die heute üblichen Systemtopologien für den Einsatz von Kameras in Hausgeräten bieten wenig Flexibilität und ermöglichen nur eine geringe Performance des Kamerasystems. Üblicherweise werden die Kamera-Module mit integrierter Bildsignalverarbeitung (Image Signal Processing, ISP) über eine performante Kameraschnittstelle (z.B. MIPI) an einen Mikrocontroller oder-prozessor (Steuereinheit) angebunden. Darüber hinaus findet man auch Topologien, wo der Kamera-Chip direkt über ein Interface an den Steuerungsrechner, der die erforderliche rechenintensive Bildsignalverarbeitung mit übernimmt, angebunden ist. Durch die Eigenschaften der Steuereinheit ist die Auswahl geeigneter Kameramodule jedoch begrenzt.

Diese Steuereinheiten verfügen in der Regel über eine Schnittstelle zu einem WLAN-Modul, um einerseits Bilddaten, andererseits aber auch Gerätedaten und Steuerungsbefehle über Netzwerke z.B. mit einem Server auszutauschen. Dabei könnte es sich beispielsweise um eine kleine WLAN-Leiterkarte handeln, die im Wesentlichen einen WLAN-Funk-Chip mit angemessener Leistung zum Handling des WLAN-Protokolls und eine Leiterbahnantenne enthält.

Die Steuereinheit, die z.B. als Haupt-Gerätesteuerung auf einer Bedien- und Anzeigenelektronik sehr stark mit anderen Aufgaben wie dem Aufbau von Displayinhalten, der Abfrage von Tastenbedienungen und der Steuerung von Garprogrammen belastet ist, muss nebenbei große Datenmengen von der Kamera zum WLAN-Modul transportieren, gegebenenfalls sogar auch noch die Bildsignalverarbeitung (z.B. Umwandlung von Bayer-Pattern, Kompression usw.) mit übernehmen. In der Regel stellt neben dem Steuerungsrechner selbst die Schnittstelle zwischen Steuerungsrechner und WLAN-Modul mit üblicherweise niedriger Performance ein weiteres "Nadelöhr" dar, was die potenzielle Übertragungsrate bzgl. der Bilddaten stark begrenzt.

Gerade für die Bildübertragung bei Verfahren wie dem vorliegenden zur Garguterkennung ist jedoch zwingend eine möglichst schnelle und qualitativ hochwertige Übertragung der Bilddaten an den externen Server bzw. die Cloud erforderlich. Erfindungsgemäß wird daher eine modifizierte Topologie bereitgestellt, um diese Nachteile zu beheben. Dabei ist eine zweite Steuereinheit vorhanden, die mit der Netzwerkschnittstelle integriert und mit der Kamera verbunden ist. Diese Steuereinheit ist dazu eingerichtet, unter Umgehung der Haupt-Gerätesteuerung von der Kamera aufgenommene Bilder über die Netzwerkschnittstelle zu versenden. Dadurch wird die Haupt-Gerätesteuerung nicht mit zusätzlichen Aufgaben jenseits der eigentlichen Aufgabe Steuerung der Bedien- und Anzeigeeinrichtungen und der Garprogramme belastet.

Die Bildübertragung kann somit mit geringeren Verzögerungen und höheren Datenraten erfolgen, so dass eine schnelle und/oder bessere Garguterkennung ausgeführt werden kann.

Gemäß einer bevorzugten Ausführung ist die zweite Steuereinheit ein System-on-Chip, das Bildverarbeitungs- und Netzwerkfunktionalität aufweist.

Erfindungsgemäß wird ein System-on-Chip (SoC) mit Prozessor und integrierter WLAN- und Multimedia-Funktionalität verwendet. Durch die direkte Verarbeitung der Kamera-Signale (z.B. Reduzierung der Auflösung) mit Unterstützung entsprechender hochoptimierter Signalverarbeitungsblöcke im SoC und einen unmittelbaren Transport der Bilddaten über die WLAN-Schnittstelle wird eine extrem hohe Bildrate ermöglicht. Die Steuereinheit bzw. die Haupt-Gerätesteuerung wird dabei entlastet und kann sich um die eigentlichen Steuerungsaufgaben kümmern. Es müssen keine großen Datenmengen über eine Schnittstelle zwischen Kamera, Haupt-Gerätesteuerung und Netzwerkschnittstelle übertragen werden. Die vergleichsweise geringen verbleibenden Mengen an Steuerdaten kann die Steuereinheit über eine entsprechend weniger leistungsfähige Schnittstelle mit dem SoC-Prozessor austauschen. So können sich weder die Haupt-Gerätesteuerung noch die herkömmlicherweise vorhandene Schnittstelle zwischen Kamera, Haupt-Gerätesteuerung und Netzwerkschnittstelle bremsend auf die Bildübertragung auswirken.

Da solche SoCs mittlerweile sehr preiswert und gut verfügbar sowie zu vielen Kameramodulen kompatibel sind, ist eine solche Topologie auf Grund der deutlich höheren Performance und der klaren Trennung der Aufgaben sehr vorteilhaft. Auch ist eine relativ einfache Variantenbildung auch für Geräte ohne Kamera/Netzwerkfähigkeit möglich. Darüber hinaus ist man bzgl. der Auswahl von Kameramodulen relativ frei und nicht an die eingeschränkten Möglichkeiten der Haupt-Gerätesteuerung gebunden.

Gemäß einem weiteren Aspekt wird ein System bereitgestellt, umfassend:
- ein Gargerät wie vorstehend beschrieben;
- einen Server mit einer Datenbank, die Bild-Merkmale bekannter Gargüter und für jedes Gargut ein eindeutig zugeordnetes Garprogramm speichert, sowie mit einer Netzwerkschnittstelle;
wobei der Server eingerichtet ist
- zum Ausführen einer auf Machine Learning basierenden Gargut-Erkennung an einem von dem Gargerät über die Netzwerkschnittstelle empfangenen Bild, um Wahrscheinlichkeiten der Übereinstimmung des zu garenden Garguts mit bekannten Gargütern zu ermitteln;
- falls mindestens eine Wahrscheinlichkeit einen vorgegebenen Schwellenwert übersteigt, das Garprogramm auszuwählen, das dem zugehörigen bekannten Gargut zugeordnet ist; und
- dem Gargerät das ausgewählte Garprogramm anzugeben.

Ein Ausführungsbeispiel der Erfindung ist in den Zeichnungen rein schematisch dargestellt und wird nachfolgend näher beschrieben. Es zeigt
- Figur 1: eine schematische Darstellung einer Ausführungsform eines erfindungsgemäßen Systems;
- Figur 2: ein Flussdiagramm einer Ausführungsform eines erfindungsgemäßen Verfahrens;
- Figur 3: eine schematische Darstellung herkömmlicher Systemtopologien; und
- Figur 4: eine schematische Darstellung einer erfindungsgemäßen Systemtopologie.

### Detaillierte Beschreibung

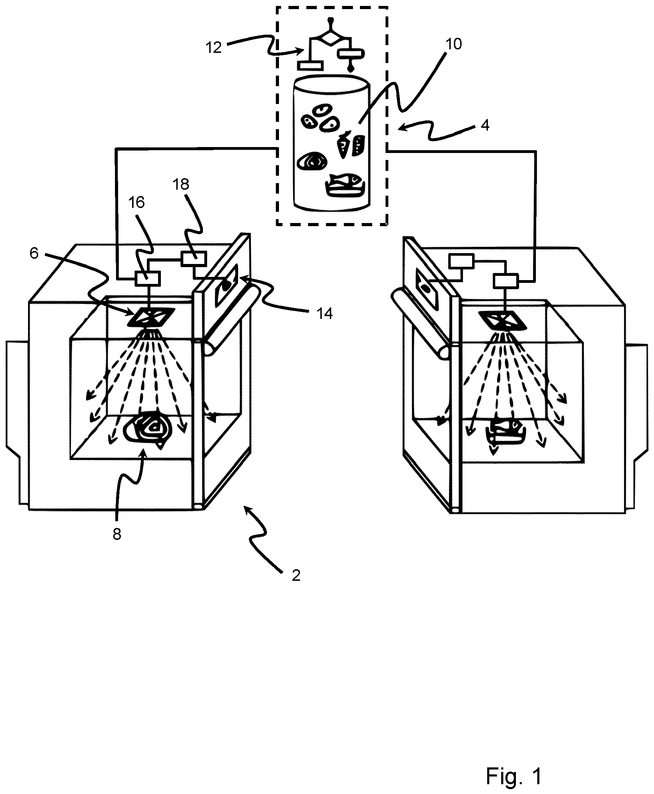

Figur 1 zeigt eine schematische Darstellung einer Ausführungsform eines erfindungsgemäßen Systems, umfassend mindestens ein Gargerät 2 und einen Server 4. Der Server 4 kann stellvertretend für einen Internet-basierten Cloud-Dienst stehen, der auf einem oder mehreren physikalischen oder virtuellen Servern ausgeführt wird.

Das Gargerät 2 weist eine Kamera 6 auf, mit der ein Bild eines Lebensmittels, hier beispielhaft ein Stück Fleisch 8, aufgenommen werden kann. Das Lebensmittel, das sich auf dem Gargutträger (hier vereinfacht der Boden des Garraums) befindet, wird durch die Erfindung vor Beginn eines Garprogramms mit der Kamera 6 erfasst. Die Bilddaten werden an den Server 4 übertragen. Die Kommunikationsschnittstelle kann dabei etwa eine WLAN-Schnittstelle 16 in den Gargeräten 2 sein. Unter Umständen erfolgt auf Seiten des Gargeräts 2 eine Vorbereitung des erfassten Bildmaterials, z.B. Skalierung, Weißabgleich, Bestimmung relevanter Bildausschnitte etc.

Der Server 4 weist eine Datenbank 10 auf, die Bild-Merkmale bekannter Gargüter (hier beispielhaft als Fisch, Fleisch, Gemüse und Kartoffeln dargestellt) und für jedes Gargut ein eindeutig zugeordnetes Garprogramm speichert, sowie eine Netzwerkschnittstelle (nicht gezeigt) zur Verbindung mit Gargeräten 2. Der Server 4 ist dazu eingerichtet, eine auf Machine Learning 12 basierende Gargut-Erkennung unter Verwendung empfangener Bilddaten und der Datenbank 10 auszuführen. Die auf Machine Learning basierende Gargut-Erkennung erkennt Muster und ordnet diese mit einer ausgewerteten Wahrscheinlichkeit in vorgegebene Klassen ein.

In Abhängigkeit der Erkennungswahrscheinlichkeit(en) werden dem Benutzer über das Gerätedisplay 14 ein oder mehrere Automatikprogramm angezeigt und vorgeschlagen. Diese Automatikprogramme werden entweder aus dem Gerätespeicher des Gargeräts 2 oder aus der zentralen Cloud bzw. dem Server 4 herausgeladen. In Abhängigkeit des ermittelten Lebensmittels wird der Garprozess optimiert, indem ein optimales Garprogramm vorgeschlagen wird. Alle zur Einstellung der Parameter des Garprozesses notwendigen Informationen werden folglich automatisch ermittelt und ausgewählt.

Aktuelle Gargeräte verfügen über Betriebssysteme, bei denen die Bilddatenauswertung der Objekterkennung lokal, also innerhalb des Geräts stattfinden. Durch die Auslagerung dieser Verarbeitung in eine Cloud gemäß der Erfindung sind Speicherkapazitäten und Rechnerleistungen und die damit verbundenen Kosten skalierbar. Die zentrale Infrastruktur ermöglicht über die Cloud, neue Gerätefunktionen und Automatikprogramme einzuspielen, ohne das Gerät zu verändern. Die Wartung des Systems und der Austausch von Daten sind folglich unkompliziert.

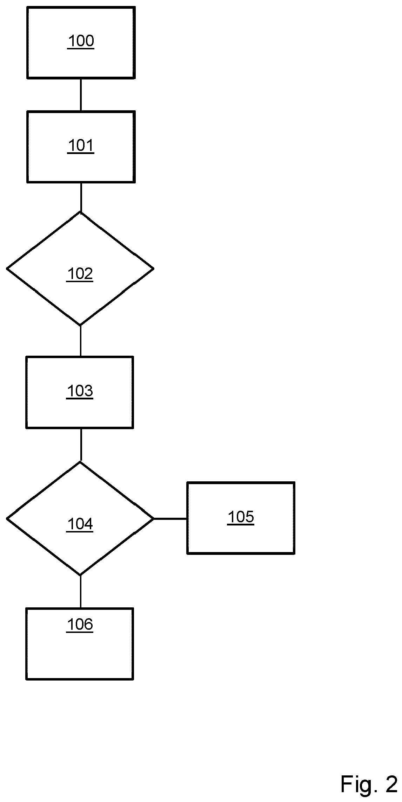

Figur 2 ist ein Flussdiagramm einer Ausführungsform des erfindungsgemäßen Verfahrens. In Schritt 100 erfolgt ein Aufnehmen eines Bildes eines zu garenden Garguts. Dieser Schritt kann von einer im Gargerät integrierten Kamera oder alternativ von einem mobilen Endgerät mit einer eingebauten Kamera, etwa einem Smartphone oder Tablet, ausgeführt werden.

In Schritt 101 erfolgt eine auf Machine Learning basierende Gargut-Erkennung an dem aufgenommenen Bild, um Wahrscheinlichkeiten der Übereinstimmung des zu garenden Garguts mit bekannten Gargütern zu ermitteln. Dies erfolgt bevorzugt auf einem in Bezug auf das Gargerät externen Server bzw. in einer Cloud.

In Schritt 102 wird geprüft, ob mindestens eine ermittelte Wahrscheinlichkeit einen vorgegebenen Schwellenwert übersteigt. Ist dies der Fall, wird in Schritt 103 ein dem zugehörigen wahrscheinlichen Gargut zugeordnetes Garprogramm ausgewählt und dem Gargerät angegeben, d.h. entweder das Garprogramm als solches dem Gargerät übermittelt, oder Informationen, welche es dem Gargerät ermöglichen, das angegebene Garprogramm selbst zu ermitteln, beispielsweise aus einem internen Gerätespeicher abzurufen. Falls keine Wahrscheinlichkeit oberhalb des Schwellenwerts liegt, kann nicht von einer erfolgreichen Erkennung ausgegangen werden. Um dem Benutzer des Gargeräts keinen mit hoher Wahrscheinlichkeit falschen Vorschlag zu machen, wird dem Gargerät in diesem Fall kein Garprogramm angegeben.

In Schritt 104 wird geprüft, ob der Benutzer das in Schritt 103 vorgeschlagene Garprogramm im Anschluss startet oder verwirft. Im Falle des Verwerfens wird in Schritt 105 die gespeicherte Wahrscheinlichkeit für das in Schritt 101 erkannte Gargut und das aufgenommene Bild verringert. Im Falle des Startens des vorgeschlagenen Garprogramms durch den Benutzer wird in Schritt 106 die gespeicherte Wahrscheinlichkeit für das in Schritt 101 erkannte Gargut und das aufgenommene Bild erhöht.

Ein Algorithmus auf dem Server bzw. in der Cloud kann wiederkehrende Gerichte bzw. Gargüter, die noch nicht gespeichert sind, und damit Vorlieben des Benutzers erkennen. Anhand dieser Informationen erstellt er benutzerspezifische Automatikprogramme und ordnet sie zu. Die direkte Gerät-Cloud-Verbindung ermöglicht Bilddaten aller betriebenen Gargeräte in der Cloud zu speichern und zu verarbeiten. Durch die entstehende Menge an Bilddaten erhält der selbstlernende Algorithmus (Machine Learning) eine gegenüber lokale im Gargerät gespeicherten Daten erhöhte Anzahl an Vergleichsmöglichkeiten und kann dadurch definierte Merkmale besser voneinander unterscheiden. Dieser Vorgang ermöglicht eine kontinuierliche Optimierung der Objekterkennung, eine Reduzierung der Identifikationsfehler und eine Erhöhung der Erkennungswahrscheinlichkeit.

Die Funktion der visuellen Objekterkennung wird kontinuierlich durch Machine Learning verbessert. Der Benutzer übernimmt durch Starten oder Verwerfen vorgeschlagener Programme die Klassifikation, die Daten der Auswahlen können somit direkt für die Mustererkennung genutzt werden. Zudem besteht die Möglichkeit, das Nutzungsverhalten eines einzelnen Benutzers zu analysieren und auf Basis dieser Auswertung das Gericht mit der höchsten Zubereitungsanzahl als Automatikprogramm in sein individuelles Gargerät einzupflegen. Außerdem besteht die Möglichkeit, bislang unbekannte Gerichte mit einer hohen Nutzungshäufigkeit und Relevanz zu identifizieren und diese nachträglich anzubieten.

Die Erfindung verbessert die Benutzerfreundlichkeit des Gargeräts und garantiert ein perfektes Garergebnis, das unabhängig von dem Bediener ist. Der Interaktionsaufwand für den Benutzer wird reduziert.

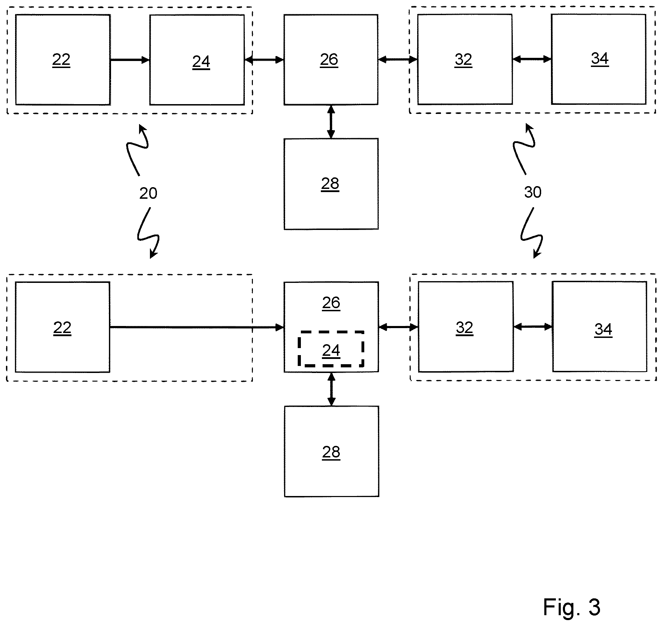

Figur 3 zeigt zwei herkömmliche Systemtopologien, wie sie bei Gargeräten mit integrierter Kamera verwendet werden. Im oberen Teil der Figur ist eine Variante gezeigt, bei der ein Kameramodul 20 mit Kamerachip 22 und integrierter Bildsignalverarbeitung 24 (Image Signal Processing ISP) über eine leistungsfähige Schnittstelle wie etwa MIPI an einen Mikrokontroller oder -Prozessor 26 angebunden ist. Weitere Elektronikmodule 28 des Gargeräts können an den Prozessor 26 angebunden sein. Ein WLAN-Modul 30 mit einem WLAN-fähigen Chip 32 sowie einer Antenne 34 ist ebenfalls an den Prozessor 26 angebunden. Die Elektronikmodule sowie das WLAN-Modul sind über Schnittstellen mit geringerer Leistungsfähigkeit mit dem Prozessor verbunden.

Im unteren Teil der Figur 3 ist eine alternative Topologie mit ansonsten gleichen Komponenten gezeigt, bei der die Bildsignalverarbeitung/ISP 24 im Prozessor 26 anstelle des Kameramoduls 20 integriert ist.

Nachteilig ist bei diesen herkömmlichen Topologien, dass der Prozessor 26 als Hauptrechner für die Bedien- und Anzeigeelektronik sowie die Gerätesteuerung zuständig und somit stark mit anderen, hoch priorisierten, Aufgaben belastet ist. Für die Übertragung großer Datenmengen vom Kameramodul 20 bis letztlich zum WLAN-Modul 30 bleibt daher nur wenig Verarbeitungszeit bzw. -Leistung übrig, zumal wenn der Prozessor 26 auch die Bildverarbeitung oder Teile davon übernehmen muss. Daneben stellt auch die üblicherweise nur wenig leistungsfähige Schnittstelle vom Prozessor 26 zum WLAN-Modul 30 ein weiteres "Nadelöhr" dar.

Diese herkömmlichen Topologien sind aufgrund dieser Probleme besonders nachteilig in Verbindung mit einer Garguterkennung. Für eine qualitativ gute sowie möglichst verzögerungsfreie Erkennung sind zwangsläufig hohe Auflösungen, Bildqualitäten sowie auch Bildübertragungsraten erforderlich. Ohne die entsprechend hohen Bildqualitäten würde sich die Erkennungswahrscheinlichkeit verringern, und bei nur langsamer Übertragung der dazu nötigen Bilddaten an den Server/die Cloud entstünden für einen Benutzer inakzeptable Verzögerungen. Eine Garguterkennung muss jedoch für die Akzeptanz durch den Benutzer sowohl zuverlässig als auch möglichst verzögerungsfrei sein.

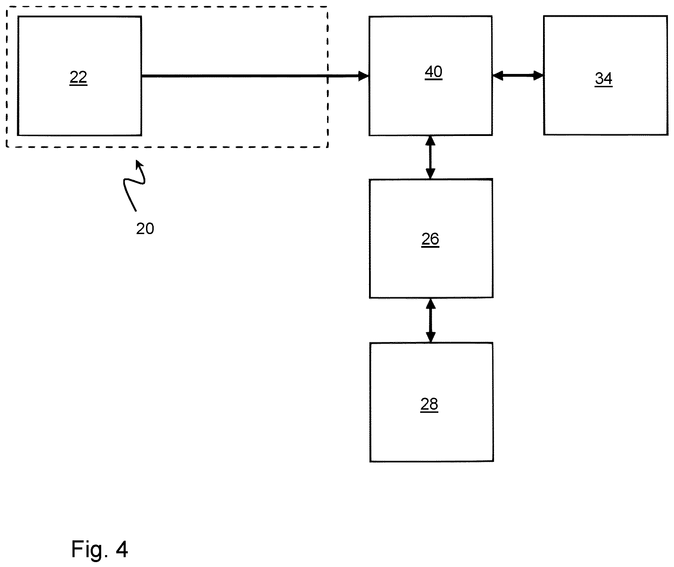

Figur 4 zeigt eine erfindungsgemäße Systemtopologie für die Verwendung in Gargeräten mit Garguterkennung. Das Kameramodul 20 mit Kamerachip 22 ist hierbei mittels einer leistungsfähigen Schnittstelle mit einem System-on-Chip (SoC) 40 verbunden, welches einen leistungsfähigen Prozessor mit integrierter WLAN- und Multimedia-Funktionalität aufweist. Eine Antenne 34 ist für die WLAN-Übertragung vorgesehen und mit dem SoC 40 verbunden. Das SoC 40 übernimmt erfindungsgemäß die Verarbeitung und Weiterleitung per WLAN der großen Datenmengen von Bilddaten für die Garguterkennung. Der Prozessor 26 bzw. Haupt-Gerätesteuereinheit wird dabei umgangen.

Der Prozessor 26, der weiterhin die Aufgaben der Steuerung von Bedien- und Anzeigeelektronik sowie die Gerätesteuerung, also die Ausführung von Garprogrammen übernimmt, ist nicht mit dem Kameramodul 20 verbunden. Stattdessen ist er über eine Schnittstelle mit geringerer Leistungsfähigkeit mit dem SoC 40 verbunden. Weitere Elektronikkomponenten wie Sensoren, Motoren, Heizeinrichtungen etc. sind über eine ebenfalls weniger leistungsfähige Schnittstelle mit dem Prozessor 26 verbunden.

Eine solche Topologie ist auf Grund der deutlich höheren Performance und der klaren Trennung der Aufgaben sehr vorteilhaft. Weder wird die wichtige Bilderfassung und - Übertragung durch den ausgelasteten Prozessor 26 behindert, noch werden Bedien- und Anzeige-Vorgänge durch Bilderfassung und -Übertragung verzögert. Für Gargeräte mit Garguterkennung ist diese Systemtopologie daher

Weiterhin ist mit dieser Topologie eine relativ einfache Variantenbildung auch für Geräte ohne Kamera möglich. Darüber hinaus ist man bzgl. der Auswahl von Kameramodulen flexibler und nicht an die Möglichkeiten bzw. Vorgaben des Prozessors 26 gebunden.

## Patentansprüche

1. Verfahren zur Steuerung eines Gargeräts, umfassend:
- Aufnehmen (100) eines Bilds eines zu garenden Garguts;
- Ausführen (101) einer auf Machine Learning basierenden Gargut-Erkennung an dem aufgenommenen Bild, um Wahrscheinlichkeiten der Übereinstimmung des zu garenden Garguts mit bekannten Gargütern zu ermitteln;
- falls mindestens eine Wahrscheinlichkeit einen vorgegebenen Schwellenwert übersteigt (102), Auswählen eines Garprogramms, das dem zugehörigen bekannten Gargut zugeordnet ist;
- dem Gargerät das ausgewählte Garprogramm angeben (103);
- Erhöhen des Wahrscheinlichkeitswerts für das aufgenommene Bild und das zugehörige Gargut (106), falls ein Benutzer das ausgewählte Garprogramm im Anschluss startet; oder
- Verringern des Wahrscheinlichkeitswerts für das aufgenommene Bild und das zugeordnete Gargut (105), falls ein Benutzer das ausgewählte Garprogramm verwirft.

2. Verfahren nach Anspruch 1, weiter umfassend, falls die mindestens eine Wahrscheinlichkeit den vorgegebenen Schwellenwert nicht übersteigt oder der Benutzer das ausgewählte Garprogramm verwirft:
- Erfassen eines vom Benutzer des Gargeräts im Anschluss eingestellten Garguts und/oder Garprogramms; und
- Erstellen einer Zuordnung zwischen dem aufgenommenen Bild und dem Gargut und/oder Garprogramm oder Erhöhen der Wahrscheinlichkeit einer existierenden Zuordnung.

3. Verfahren nach Anspruch 1 oder 2, wobei das Bild von einer Kamera des Gargeräts oder eines mobilen Endgeräts aufgenommen wird.

4. Verfahren nach einem der vorhergehenden Ansprüche, weiter umfassend, falls die Wahrscheinlichkeiten mehrerer bekannter Gargüter den vorgegebenen Schwellenwert überschreiten:
- Auswählen eines jeweiligen Garprogramms für jedes bekannte Gargut, dessen Wahrscheinlichkeit den vorgegebenen Schwellenwert überschreitet;
- dem Gargerät die ausgewählten Garprogramme in der Reihenfolge absteigender Wahrscheinlichkeit angeben;
wobei der Wahrscheinlichkeitswert für das aufgenommene Bild und das zugehörige Gargut bei einem Garprogramm erhöht wird, das der Benutzer im Anschluss startet.

5. Verfahren nach Anspruch 4, wobei der Wahrscheinlichkeitswert für das aufgenommene Bild und das zugeordnete Gargut für Garprogramme verringert wird, die der Benutzer nicht im Anschluss startet.

6. Verfahren nach einem der vorhergehenden Ansprüche, wobei dem Gargerät das ausgewählte Garprogramm angeben wird, indem ein dem Garprogramm zugeordnetes Gargut angegeben wird.

7. Gargerät (2) zur Ausführung des Verfahrens nach einem der Ansprüche 1 bis 6 eingerichtet ist, umfassend:
- eine Haupt-Gerätesteuereinheit (18, 26) zur Steuerung von Bedien- und Anzeigeelementen (14) und Garfunktionen des Gargeräts;
- eine Netzwerkschnittstelle mit einer zweiten Steuereinheit (16);
- eine Kamera (6), die mit der zweiten Steuereinheit (16) verbunden und eingerichtet ist, Bilder des Garraums aufzunehmen;
wobei die zweite Steuereinheit (16) eingerichtet ist, unabhängig von der Haupt-Gerätesteuereinheit (18) aufgenommene Bilder zu verarbeiten und über die Netzwerkschnittstelle zu versenden.

8. Gargerät nach Anspruch 7, wobei die zweite Steuereinheit ein System-on-Chip (40) ist, das Bildverarbeitungs- und Netzwerkfunktionalität aufweist.

9. System, umfassend:
- ein Gargerät (2) nach einem der Ansprüche 7 oder 8;
- einen Server (4) mit einer Datenbank (10), die Bild-Merkmale bekannter Gargüter und für jedes Gargut ein eindeutig zugeordnetes Garprogramm speichert, sowie mit einer Netzwerkschnittstelle;
wobei der Server (4) eingerichtet ist
- zum Ausführen einer auf Machine Learning (12) basierenden Gargut-Erkennung an einem von dem Gargerät über die Netzwerkschnittstelle empfangenen Bild, um Wahrscheinlichkeiten der Übereinstimmung des zu garenden Garguts (8) mit bekannten Gargütern zu ermitteln;
- falls mindestens eine Wahrscheinlichkeit einen vorgegebenen Schwellenwert übersteigt, das Garprogramm auszuwählen, das dem zugehörigen bekannten Gargut zugeordnet ist; und
- dem Gargerät (2) das ausgewählte Garprogramm anzugeben.
